# EUROPEAN PATENT SPECIFICATION

(11) **EP 2 251 994 B1**
(45) Date of publication and mention of the grant of the patent: **30.10.2013**
(21) Application number: 09160320.9
(22) Date of filing: 14.05.2009
(51) Int. Cl.: G06F 17/30, H04H 60/61, G06Q 30/02, H04N 21/45, H04N 21/482, H04N 21/466

(54) **System and method for optimization of content recommendation**
System und Verfahren für optimierte Inhaltsempfehlung
Système et procédé d'optimisation de recommandation de contenu

(43) Date of publication of application: 17.11.2010
(73) Proprietor: Advanced Digital Broadcast S.A., 1292 Chambesy (CH)
(72) Inventor: Szajna, Tomasz, 66-004 Drzonkow (PL)
(74) Representative: Pawlowski, Adam

(56) References cited:
- EP-A- 1 065 616
- WO-A-98/33135
- US-A1- 2003 065 520
- US-A1- 2006 212 442
- US-A1- 2008 301 582
- US-B1- 6 636 836

## Description

The present invention relates to systems and methods for content recommendation. It can be applied to any type of content recommended to a user, for example radio, music, television, shopping, products of interest or Internet content items.

With the development of modern audio/video technologies, users can instantly acquire large amount of information at any given time. When people face too much information for selection, they are in an urgent need of a tool that can help them to rapidly find a content item, in which they are really interested, i.e. a personalized content recommendation system. At present, various kinds of content recommendation systems have already been applied to television, broadcast and Internet fields extensively.

Historically, television viewers identified television programs of interest by analysing printed television program guides. Typically, such printed television program guides contained grids listing the available television programs by time and date, channel and title.

More recently, a number of tools have been proposed and become available for recommending television programming.

There are typically two types of television recommenders: implicit and explicit.

Implicit television program recommenders generate television program recommendations based on information derived from the viewing history of the viewer, in a non-obtrusive manner. An implicit television program recommender processes the viewing history to derive an implicit viewer profile containing a set of inferred rules that characterize the preferences of the viewer.

An example of such an approach is disclosed in US Patent 7051352 "Adaptive TV program recommender", where a feature of viewer history data structure, including selected records from the EPG database, has been presented.

Explicit television program recommenders, on the other hand, explicitly question viewers about their preferences for content attributes, such as title, genre, actors, channel, and date/time to subsequently derive viewer profiles and generate recommendations.

An example of such an approach has been defined in EP1400111 - "Television program selection apparatus and method", where a user profile includes characteristics weights given by the user to the scheduled program characteristics of a plurality of scheduled television programs.

State of the art recommender systems rely on predicting the score that a user would assign to a content item and selecting for recommendation the items with the highest predicted recommendation scores. For example, top ten items.

Additionally, there is known a system from the US Patent 6041311 "Method and apparatus for item recommendation using automated collaborative filtering", wherein a recommendation score may be supplemented with an uncertainty factor, which may be expressed as a percentage representing the probability that the associated rating is incorrect or as an expected deviation of the predicted rating from the "correct" value. The method and apparatus are based on Gaussian distribution of the associated prediction error.

The known content recommendation methods are based on predicted recommendation scores and the items with the highest value of prediction are being recommended to the user. The error of prediction of the recommendation scores is distributed normally (i.e. Gaussian distribution) or can be well approximated by normal distribution, that by its nature is symmetrical. Therefore a recommender may with equal probability give a score lower by X or more or greater by X or more than the actual score a user would assign to the particular item.

A prediction error is herein defined as the difference between the predicted recommendation score and the actual score which would be given by the user. When a recommendation engine predicts that a user would like a content item more than in fact the user likes it, the prediction error is positive. When the predicted recommendation score reflects exactly the real user's taste, the prediction error is zero. When the predicted recommendation score is lower than the actual score, which would be given by the user, the prediction error is negative.

Due to the imperfections of recommender systems, most of item recommendations have an associated prediction error. A known approach to evaluation of such systems is the measurement of prediction accuracy, usually in a sense of root mean square error (RMSE) or mean absolute error (MAE). The recommender systems, known to date, rely on minimization of the root mean square error.

Such standard recommender systems are not appropriate for users who wish to have the recommendation optimized to their particular needs. For example, some users find it most important to receive the potentially most interesting content items, at a cost of receiving some uninteresting items among them. Other users find it most important not to receive uninteresting items, at a cost of not receiving some of the most interesting items.

Moreover, a European patent application EP1065616 discloses a system for providing predicted user ratings which includes calculating the accuracy of predictions based on the variance of distribution of the predicted user's rating. The system presents and ranks the results by treating the variance as a source of noise. A PCT application no. WO 98/33135 presents a method for recommending items to users using automated collaborative filtering stores profiles of users relating ratings to items in memory.

The aim of the invention is to provide a system and method for optimization of recommendation scores given by a recommender system as set out in the claims.

The object of the invention presented herein is accomplished in accordance with the principles of the presented invention by providing an improved system and method for optimization of recommendation scores. Further details and features of both the system and the method, its nature and various advantages will become more apparent from the accompanying drawing, and the following detailed description of the preferred embodiments shown in a drawing, in which:
FIG. 1 shows a procedure for optimization of recommendation scores;
FIG. 2 shows a system for optimization of recommendation scores;

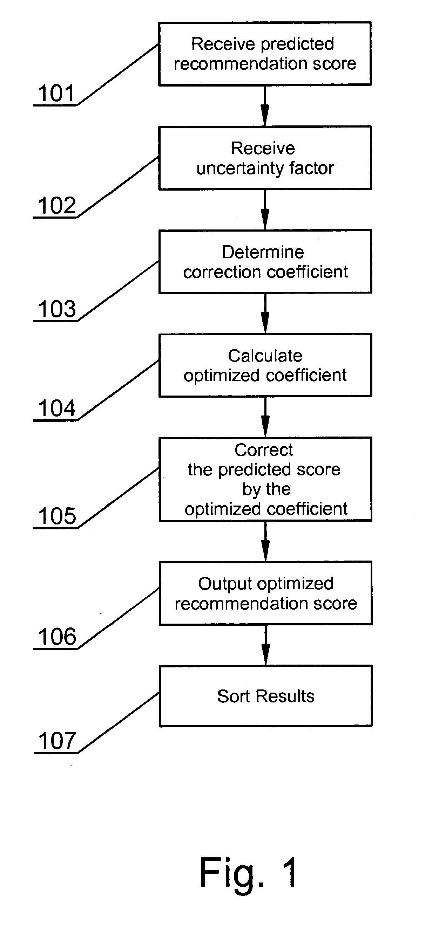

FIG. 1 shows an embodiment of a procedure for optimization of a recommendation score of an item from a plurality of items. First, at step 101, a predicted recommendation score PS for the item from a plurality of items is received from the recommender engine. Then, at step 102, an uncertainty factor UF for the content item is received from the recommender engine. The uncertainty factor UF is item-dependent, therefore it is not the same for each recommended item. The higher the uncertainty factor UF, the higher the uncertainty associated with the predicted recommendation score. In step 103 a correction coefficient CC is determined. Then, in step 104, an optimal correction OC is calculated by multiplying the uncertainty factor UF by the correction coefficient CC. The next step 105 is to correct the predicted recommendation score PS by the optimal correction OC, for example by adding the optimal correction OC to the predicted recommendation score PS, to obtain an optimized recommendation score OS. Then, the optimized recommendation score OS may be output in step 106 for further processing 107, for example to sort the content items in the order of the optimized recommendation scores OS in a descending order. The content items ranked at the top of the sorted list may be recommended to the user.

The value of the uncertainty factor UF can be obtained by means of cross-validation done for each item separately. The cross-validation is a method well known in the art and is sometimes called rotation estimation.

The uncertainty factor UF is expressed in terms of an expected standard deviation of a predicted recommendation score PS.

The way in which the recommendations are optimized depends on the selection of the value of the correction coefficient CC.

An item having a high uncertainty factor UF may be potentially a highly interesting item or a highly uninteresting item for the user, and the predicted recommendation score PS does not have a big impact since it may be inaccurate i.e. the item may be much more interesting or uninteresting than the PS defines. On the other hand, the level of interest for the user of an item having a low uncertainty factor UF depends highly on the predicted recommendation score PS.

The sign of the correction coefficient CC allows optimizing the recommendations with respect to whether the user priority is to increase the probability of receiving the most interesting recommendations or to decrease the probability of receiving uninteresting recommendations.

When the correction coefficient CC is positive, the recommendations are optimized for those users, whose positive experience from being proposed with interesting recommendation is stronger than the negative experience from being proposed with uninteresting recommendation.

When the correction coefficient CC is negative, the recommendations are optimized for those users, whose negative experience from being proposed with uninteresting recommendation is stronger than the positive experience from being proposed with interesting recommendation.

For users whose negative experience from being proposed with uninteresting recommendation matches the positive experience from being proposed with interesting recommendation the optimal value of the correction coefficient CC is zero. Such behaviour is well modelled by RMSE and MAE.

The magnitude of the correction coefficient CC allows to control the impact of the uncertainty factor UF on the recommendations. Higher values of the correction coefficient CC allow to better distinguish potentially very interesting or very uninteresting items. Lower values of the correction coefficient CC allow to make the recommendations more dependent on the predicted recommendation score PS, decreasing the importance of the uncertainty factor UF.

The correction coefficient may be defined depending on the type of the item for which the recommendation is performed. The type may be determined for the whole set of items or for each item from the set separately. For example, recommendations for popular items, such as shopping items, television programming, popular Internet content may be calculated with a negative correction coefficient. In this way, the probability of receiving uninteresting recommendations will be decreased in order to increase the satisfaction of a typical user. Alternatively, recommendations for specialized items, such as technical data, specialized Internet content may be calculated with a positive correction coefficient, in order to promote the potentially most relevant items, in order to increase the satisfaction of a specialized user.

The correction coefficient may be defined depending on the profile of the user. For example, recommendations for inexperienced users may be calculated with a negative correction coefficient. Alternatively, recommendations for experienced, specialist users, may be calculated with a positive correction coefficient.

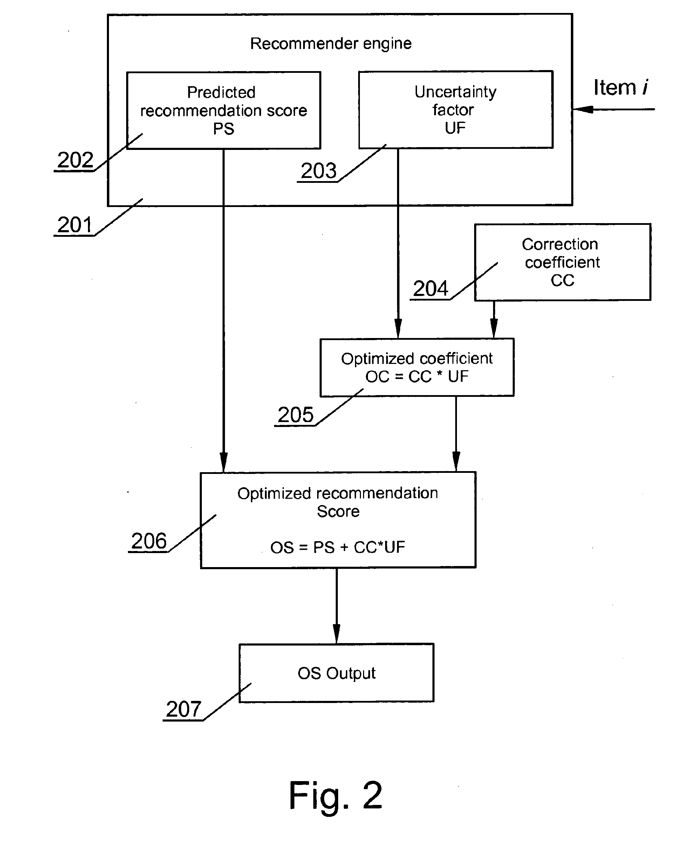

FIG. 2 shows a system for optimization of recommendation scores according to the invention. The system comprises a prior art recommender engine 201 comprising two modules, namely a module 202 for computing the predicted recommendation score PS and a module 203 for computing the uncertainty factor UF for the content item. A module 204 is responsible for defining the correction coefficient CC. A module 205 is responsible for calculating the optimal correction OC by multiplying the uncertainty factor UF and the correction coefficient CC. A module 206, basing on input from modules 202 and 205, corrects the predicted recommendation score PS by the optimal correction OC to obtain the optimized recommendation score OS. A module 207 is responsible for outputting the optimized recommendation score OS, for example for the purpose of sorting the recommendations according to the optimized recommendation scores.

It can be easily recognised, by one skilled in the art, that the aforementioned system and method for content recommendation optimisation may be performed and/or controlled by one or more computer programs. Such computer programs are typically executed by utilizing the computing resources in computing devices such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the invention presented herein.

The technique of the present invention may be implemented in any computing device including mobile phone, PDA's, set-top boxes, portable multimedia players, PCs and similar devices having access to television data.

The system and method according to the present invention allow obtaining recommendations which are more optimized for the needs of the users. Users satisfaction is greater than in case of typical recommenders relying solely on predicting solely the recommendation score, without taking into account the uncertainty factor.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the invention. The presented preferred embodiments are exemplary only, and are not exhaustive of the scope of the invention presented herein. Accordingly, the scope of protection is not limited to the preferred embodiments described in the specification, but is only limited by the claims that follow.

## Claims

1. A computer-implemented method for optimization of a recommendation score of an item from a plurality of items, the method comprising the steps of:
• receiving, from a recommender engine, a predicted recommendation score PS for the item and an uncertainty factor UF for the recommendation score;
• outputting an optimized recommendation score OS,
the method being **characterised in that** it further comprises the steps of:
• analysing a profile of a user for whom the optimized recommendation score is to be output,
• determining a correction coefficient CC from the analysis of the profile of the user, wherein the correction coefficient CC has:
○ a positive value for a user whose positive experience from being proposed with interesting recommendation is stronger than the negative experience from being proposed with uninteresting recommendation,
○ a negative value for a user whose negative experience from being proposed with uninteresting recommendation is stronger than the positive experience from being proposed with interesting recommendation,
○ a zero value for a user whose negative experience from being proposed with uninteresting recommendation equals the positive experience from being proposed with interesting recommendation,
• calculating an optimal correction OC by multiplying the uncertainty factor UF by the correction coefficient CC, wherein the uncertainty factor UF is expressed in terms of an expected standard deviation of a predicted recommendation score PS,
• correcting the predicted recommendation score PS by adding the optimal correction OC thereto to obtain the optimized recommendation score OS.

2. A computer program comprising program code means for performing all the steps of the method of claim 1 when said program is run on a computer.

3. A computer readable medium having computer-executable instructions performing all the steps of the computer-implemented method according to claim 1.

4. A computer-implemented system for optimization of a recommendation score of an item from a plurality of items, the system comprising:
• a recommender engine (201), comprising a module (202) for generating a predicted recommendation score PS for the item and a module (203) for generating an uncertainty factor UF for the item,
**characterized in that** it further comprises
• a module (204) for determining a correction coefficient CC, by analysing a profile of a user for whom the optimized recommendation score is to be output, wherein the correction coefficient CC has:
○ a positive value for a user whose positive experience from being proposed with interesting recommendation is stronger than the negative experience from being proposed with uninteresting recommendation,
○ a negative value for a user whose negative experience from being proposed with uninteresting recommendation is stronger than the positive experience from being proposed with interesting recommendation,
○ a zero value for a user whose negative experience from being proposed with uninteresting recommendation equals the positive experience from being proposed with interesting recommendation,
• a module (205) for calculating an optimal correction OC by multiplying the uncertainty factor UF by the correction coefficient CC, wherein the uncertainty factor UF is expressed in terms of an expected standard deviation of a predicted recommendation score PS
• a module (206) for calculating an optimized recommendation score OS by adding the optimal correction OC to the predicted recommendation score PS,
• a module (207) for outputting the optimized recommendation score OS.

## Patentansprüche

1. Computer-implementiertes Verfahren zum Optimieren einer Empfehlungswertung eines Gegenstands aus einer Mehrzahl von Gegenständen, wobei das Verfahren die Schritte umfasst:
• Empfangen, von einer Empfehlungsmaschine, einer vorhergesagten Empfehlungswertung PS für den Gegenstand und eines Unsicherheitsfaktors UF für die Empfehlungswertung;
• Ausgeben einer optimierten Empfehlungswertung OS,
wobei das Verfahren **dadurch gekennzeichnet ist, dass** es ferner die Schritte umfasst:
• Analysieren eines Profils eines Benutzers, für den die optimierte Empfehlungswertung ausgegeben werden soll,
• Bestimmen eines Korrekturkoeffizienten CC aus der Analyse des Profils des Benutzers, worin der Korrekturkoeffizient CC aufweist:
○ einen positiven Wert für einen Benutzer, dessen positive Erfahrung aus Vorschlag mit interessierender Empfehlung stärker ist als negative Erfahrung aus Vorschlag mit nicht-interessierender Empfehlung,
○ einen negativen Wert für einen Benutzer, dessen negative Erfahrung aus Vorschlag mit nicht-interessierender Empfehlung stärker ist als die positive Erfahrung aus Vorschlag mit interessierender Empfehlung,
○ einen Nullwert für einen Benutzer, dessen negative Erfahrung aus Vorschlag mit nicht-interessierender Empfehlung gleich der positiven Erfahrung aus Vorschlag mit interessierender Empfehlung ist,
• Berechnen einer optimalen Korrektur OC durch Multiplizieren des Unsicherheitsfaktors UF mit dem Korrekturkoeffizienten CC, worin der Unsicherheitsfaktor UF als erwartete Standardabweichung einer vorhergesagten Empfehlungswertung PS ausgedrückt wird,
• Korrigieren der vorhergesagten Empfehlungswertung PS durch Addieren der optimalen Korrektur OC dort hinzu, um die optimierte Empfehlungswertung OS zu erhalten.

2. Computerprogramm, das Programmcode-Mittel aufweist, zur Durchführung aller Schritte des Verfahrens von Anspruch 1, wenn das Programm auf einem Computer läuft.

3. Computer-lesbares Medium, das Computer-ausführbare Anweisungen aufweist, die alle Schritte des Computer-implementierten Verfahrens gemäß Anspruch 1 durchführen.

4. Computer-implementiertes System zum Optimieren einer Empfehlungswertung eines Gegenstands aus einer Mehrzahl von Gegenständen, wobei das System umfasst:
• eine Empfehlungsmaschine (201), die ein Modul (202) zum Erzeugen einer vorhergesagten Empfehlungswertung PS für den Gegenstand sowie ein Modul (203) zum Erzeugen eines Unsicherheitsfaktors UV für den Gegenstand aufweist,
**dadurch gekennzeichnet, dass** es ferner umfasst:
• ein Modul (204) zur Bestimmung eines Korrekturkoeffizienten CC durch Analyse eines Profils eines Benutzers, für den die optimierte Empfehlungswertung ausgegeben werden soll, worin der Korrekturkoeffizient CC aufweist:
○ einen positiven Wert für einen Benutzer, dessen positive Erfahrung aus Vorschlag mit interessierender Empfehlung stärker ist als negative Erfahrung aus Vorschlag mit nicht-interessierender Empfehlung,
○ einen negativen Wert für einen Benutzer, dessen negative Erfahrung aus Vorschlag mit nicht-interessierender Empfehlung stärker ist als die positive Erfahrung aus Vorschlag mit interessierender Empfehlung,
○ einen Nullwert für einen Benutzer, dessen negative Erfahrung aus Vorschlag mit nicht-interessierender Empfehlung gleich der positiven Erfahrung aus Vorschlag mit interessierender Empfehlung ist,
• ein Modul (205) zum Berechnen einer optimalen Korrektur OC durch Multiplizieren des Unsicherheitsfaktors UV mit dem Korrekturkoeffizienten CC, worin der Unsicherheitsfaktor UF als erwartete Standardabweichung einer vorhergesagten Empfehlungswertung PS ausgedrückt ist,
• ein Modul (206) zum Berechnen einer optimierten Empfehlungswertung OS durch Addieren der optimalen Korrektur OC zu der vorhergesagten Empfehlungswertung PS,
• ein Modul (207) zum Ausgeben der optimierten Empfehlungswertung OS.

## Revendications

1. Procédé implémenté par ordinateur pour l'optimisation d'un résultat de recommandation d'un article parmi une pluralité d'articles, le procédé comprenant les étapes :
- de réception, depuis un moteur de recommandation, d'un résultat de recommandation prédit RP pour l'article et d'un facteur d'incertitude FI pour le résultat de recommandation ;
- de fourniture en sortie d'un résultat de recommandation optimisé RO,
le procédé étant **caractérisé en ce qu'**il comprend en outre les étapes :
- d'analyse d'un profil d'un utilisateur pour qui le résultat de recommandation optimisé doit être fourni en sortie,
- de détermination d'un coefficient de correction CC à partir de l'analyse du profil de l'utilisateur, dans lequel le coefficient de correction CC comporte :
-- une valeur positive pour un utilisateur dont l'expérience positive de s'être vu proposer une recommandation intéressante est plus forte que l'expérience négative de s'être vu proposer une recommandation inintéressante,
-- une valeur négative pour un utilisateur dont l'expérience négative de s'être vu proposer une recommandation inintéressante est plus forte que l'expérience positive de s'être vu proposer une recommandation intéressante,
-- une valeur nulle pour un utilisateur dont l'expérience négative de s'être vu proposer une recommandation inintéressante est égale à l'expérience positive de s'être vu proposer une recommandation intéressante,
- de calcul d'une correction optimale CO en multipliant le facteur d'incertitude FI par le coefficient de correction CC, dans lequel le facteur d'incertitude FI est exprimé en termes d'un écart-type attendu d'un résultat de recommandation prédit RP,
- de correction du résultat de recommandation prédit RP en y ajoutant la correction optimale CO afin d'obtenir le résultat de recommandation optimisé RO.

2. Programme informatique comprenant un moyen de code de programme pour réaliser toutes les étapes du procédé de la revendication 1, lorsque ledit programme est exécuté sur un ordinateur.

3. Support lisible par ordinateur comportant des instructions exécutables par ordinateur réalisant toutes les étapes du procédé implémenté par ordinateur selon la revendication 1.

4. Système implémenté par ordinateur pour l'optimisation d'un résultat de recommandation d'un article parmi une pluralité d'articles, le système comprenant :
- un moteur de recommandation (201), comprenant un module (202) pour générer un résultat de recommandation prédit RP pour l'article et un module (203) pour générer un facteur d'incertitude FI pour l'article ;
**caractérisé en ce qu'**il comprend en outre
- un module (204) pour déterminer un coefficient de correction CC, en analysant un profil d'un utilisateur pour qui le résultat de recommandation optimisé doit être fourni en sortie, dans lequel le coefficient de correction CC comporte :
- une valeur positive pour un utilisateur dont l'expérience positive de s'être vu proposer une recommandation intéressante est plus forte que l'expérience négative de s'être vu proposer une recommandation inintéressante,
- une valeur négative pour un utilisateur dont l'expérience négative de s'être vu proposer une recommandation inintéressante est plus forte que l'expérience positive de s'être vu proposer une recommandation intéressante,
- une valeur nulle pour un utilisateur dont l'expérience négative de s'être vu proposer une recommandation inintéressante est égale à l'expérience positive de s'être vu proposer une recommandation intéressante,
- un module (205) pour calculer une correction optimale CO en multipliant le facteur d'incertitude FI par le coefficient de correction CC, dans lequel le facteur d'incertitude FI est exprimé en termes d'un écart-type attendu d'un résultat de recommandation prédit RP,
- un module (206) pour calculer un résultat de recommandation optimisé RO en ajoutant la correction optimale CO au résultat de recommandation prédit RP,
- un module (207) pour fournir en sortie le résultat de recommandation optimisé RO.
